# EUROPEAN PATENT SPECIFICATION

(11) **EP 1 318 714 B1**
(45) Date of publication and mention of the grant of the patent: **08.09.2010**
(21) Application number: 01982925.8
(22) Date of filing: 24.09.2001
(51) Int. Cl.: A01G 31/00

(54) **CULTURE SYSTEM**
ANZUCHTSYSTEM
SYSTEME DE CULTURE

(30) Priority: 22.09.2000 NL 1016245; 27.03.2001 NL 1017712
(43) Date of publication of application: 18.06.2003
(73) Proprietor: Wagenaar, Louis Johan, 2314 GC Leiden (NL)
(72) Inventor: Wagenaar, Louis Johan, 2314 GC Leiden (NL)
(74) Representative: Volmer, Johannes Cornelis
(86) International application number: PCT/NL2001/000700
(87) International publication number: WO 2002/037950

(56) References cited:
- WO-A-91/01086
- US-A- 5 652 196
- DATABASE WPI Section Ch, Week 199751 Derwent Publications Ltd., London, GB; Class C04, AN 1997-550742 XP002177353 & CN 1 129 685 A (WANG Q), 28 August 1996 (1996-08-28)

## Description

The present invention relates to a culture system for plants and/or plant tissues.

It is known to make use of closed culture systems, for instance for reproducing, shoot forming, sowing and cultivating young plant material, root crop material or plant tissues, wherein the nutrients required for the plant material, such as salts and carbohydrates, are generally held in sterile systems in semi-solid feed medium such as agar.

For the culture of plants or plant tissues the providing and sustaining of the correct growth conditions are of very great importance. Not only do temperature, light intensity and the presence of moisture play an important part, the presence and composition of the correct nutrients are also extremely important for optimum development of the plant material.

Because diffusion of nutrients in semi-solid feed medium or soil is difficult, when such culture media are used the feed of nutrients not available in the immediate vicinity of the roots, cut surface or other take-up point of the plant becomes more difficult as the distance which must be bridged by the nutrients to for instance the root becomes larger. The waste matter generated by the plant material simultaneously accumulates around the plant material, whereby the optimum development of the plant material is inhibited. Furthermore, the nutrient requirement is seldom constant during the growth process, and often increases through time. The continuous feed of sufficient nutrients is therefore of great importance for the development of the plants and/or plant material.

The use of a liquid culture medium instead of for instance agar partly obviates these problems. One of the problems of using a liquid culture medium is however that there is a maximum osmotic value for the culture medium because the plants or tissues for cultivating accept only a determined maximum osmotic pressure (often differing per variety).

During the development of the plant material nutrients axe taken up from the culture medium and waste products are relinquished to the culture medium. The quantity of nutrients present in the culture medium therefore decreases through time. The addiction of new nutrients during culture is not generally desirable and, in the case of closed systems, is moreover difficult and time-consuming. It is further generally desirable to keep the culture system sterile, and additional manipulations of the culture system, such as adding extra nutrients, increase the chance of infections in the culture.

The object of the present invention is to provide a culture system wherein the above stated problems are resolved.

This objective is achieved with the invention by providing a culture system for plants and/or plant tissues, comprising at least one liquid culture medium comprising one or more nutrients and a stock of one or more nutrients from which the nutrients are dispensed gradually to the culture medium. Thus is ensured that a sufficient quantity of nutrients is available in the culture system during the whole of the culture without additional manipulations of the culture system, such as adding new nutrients after a period of time, being necessary. In the case of for instance sterile culture systems, there is hereby less chance of compromising the sterility.

A gradual dispensing according to the present invention is understood to mean that the nutrients are relinquished to the culture medium not immediately after placing of the stock, but gradually. In this manner the quantity of nutrients remains continuously optimal, and it is possible to prevent a temporary, possibly harmful increase in nutrients occurring in the culture medium.

In a particular embodiment the culture system comprises a stock of one or more nutrients from which the nutrients are dispensed in delayed manner into the culture medium. This means that at the start of the culture the nutrients are dispensed not immediately but only after a determined time, i.e. with a "dalay", to the culture medium and become available to the plants/tissues in the culture system. Directly at the start a high concentration of nutrients can hereby be added to the culture system without the tender young plants and/or plant tissues coming into contact with this high concentration of nutrients and being harmed thereby. When after a time the nutrients are then dispensed in "delayed" manner to the culture medium, the concentration of dissolved nutrients in the culture medium has already deceased, thus preventing too high a concentration. Furthermore, the plants are generally less vulnerable at that stage of the culture.

The nutrients are preferably dispensed in delayed and gradual manner into the culture medium.

In order to ensure that for instance waste products do not accumulate around the plant material, in the culture system according to the invention the culture medium is a liquid culture medium. The culture medium can herein be any appropriate culture medium.

The term "nutriment stock" as used in the present invention relates to a "carrier" in/on which a concentrate of nutrients is present. The nutrients are herein present in a concentration hither than the concentration of the nutrients in the culture medium itself. The term "nutrients" as used in the present invention relates to substances which are added to the culture medium and can be taken up therefrom by the plant.

The stock can be embodied in any suitable manner such that the nutrients can be placed in highly concentrated form in for instance a liquid culture medium, whereafter the nutrients are relinquished gradually, and preferably in delayed manner, from that stock to the culture medium and can be taken up by the plant material. The nutrient stock preferably comprises a tablet, block, capsule, granulate, moulded product, powder mixture, paste or syrup. In a particular preferred embodiment the nutrient stock, such as for instance the tablet, the moulded product, block or granule, is coated for even better regulation of the delayed, gradual dispensing of the nutrients. During the coating the same substances can be used as those of which the stock consists, although other substances can also be used for this purpose.

A particularly suitable embodiment of the culture system according to the invention is obtained when the stock comprises at least one or more fatty acids and/or derivatives thereof, in which the nutrients are incorporated in finely distributed manner. Owing to the specific properties of fatty acids a stock is obtained which is not water-soluble but which is however water-permeable up to a certain point. The aqueous culture medium is largely retained by the aliphatic chains of the fatty acids, while a small amount of the culture medium can still permeate into the moulded product due to the polar head of fatty acids. The nutrients present in for instance the moulded product consisting of fatty acids are thus taken up in delayed gradual manner into the aqueous culture medium.

According to the invention the fatty acids and/or derivatives thereof preferably have a melting temperature which is above the temperature of the culture medium (generally around 15-20°C), so that the stock does not dissolve too quickly into the culture medium. The fatty acids and/or derivatives thereof preferably have a melting temperature lying above 15°C, in particular above 20°C.

Diverse fatty acids and/or fatty acid mixtures can be used for the culture system according to the invention, such as for instance stearic acid, palmitic acid and/or myristic acid. A very suitable fatty acid for use in the invention is stearic acid. It is also possible to prepare mixtures of fatty acids, some fatty acids of which exist as oil below the temperature of the culture medium, such as linolenic acid or oleic acid. Oils, fatty alcohols, lecithins or waxes which are liquid or semi-solid at the temperature of the culture medium can also be included or serve as basis. In order to obtain a gradual dispensing, fatty acid derivatives can also be used, wherein for instance one or more molecules are linked to the fatty acid, such as ethyl oleate, sodium cetyl stearyl sulphate, polyethylene glycol ethers of fatty acids or fatty alcohols, or magnesium stearate. For instance the melting point and/or the structure and/or the water permeability of the product can hereby be changed or regulated.

In addition to fatty acids and/or derivatives thereof, the nutrient stock can further comprise one or more other suitable compounds from which the nutrients are dispensed gradually, such as for instance polymers such as (hydroxyethyl) cellulose and other cellulose derivatives, polysorbates, sorbitan fatty-acid esters, wool wax and other (synthetic) waxes, cellulose acetates, polyacrylates, polyvinyl acetates, shellac, carbomers, poloxamers and/or polymerized coconut oil fatty-acid derivatives, and biodegradable polymers such as polylactic acids, polygalactides and mixtures hereof.

In a very suitable embodiment of the invention the stock comprises a moulded product of stearic acid in which the nutrients are incorporated in finely distributed manner.

In another advantageous embodiment of the invention the stock comprises one or more compounds which after dispensing into the culture medium are converted into one or more nutrients. This ensures that the nutrients are relinquished in gradual manner to the culture medium. The conversion of the compounds into nutrients can take place for instance under the influence of enzymes.

The nutrients which can be used for the nutrient stock in the culture system according to the invention preferably comprise carbohydrates, hormones, proteins, vitamins, plant growth regulators, crop protecting agent, salts and/or minerals and/or combinations thereof. In addition, it can be advantageous to add one or more pesticides/herbicides, optionally in combination with the nutrients.

The carbohydrates preferably comprise starch, saccharose, maltose, glucose, fructose, oligosaccharides and/or (malto)dextrins. The advantage of using carbohydrates with longer chains is that the osmolar pressure of the culture medium is not thereby increased.

The hormones which can be used in the culture system according to the invention comprise for instance auxins, gibberallins, abscisinic acid and/or cytokinins, such as benzyl-amino-purine (BAP) and kinetin.

Suitable salts which can be used in the culture system according to the invention are for instance phosphate, nitrate, magnesium, potassium, borate and/or sulphate salts.

In a preferred embodiment of the culture system the nutrient stock is arranged directly in the culture medium. The stook can however also be used in any other appropriate manner in the culture system. It can for instance be suspended above the culture medium, wherein the nutrients drip gradually out of the stock into the culture system, or be fixed to the wall ox cover from which the stock is released after a time, i.e. in delayed manner, and drops into the culture medium so that the nutrients become available.

The invention is further elucidated with reference to the accompanying examples and figures.
Figures 1-4 show dispensing patterns of the nutrients from diverse nutrient stocks according to the invention. The amount of released nutrients (% of maximum) is herein plotted over time.
Figure 1 shows the dispensing pattern of a coated moulded product of stearic acid incorporating saccharose (60% stearic acid/40% saccharose).
Figure 2 shows the gradual dispensing pattern of an uncoated moulded product of stearic acid incorporating both BAP (50 µg) (indicated with asterisks) and sugar (50%) (indicated with dots) .
Figure 3 finally shows the dispensing pattern of a moulded product of a mixture of stearic acid and palmitic acid incorporating 30% saccharose.
Figure 4 shows the dispensing pattern of a tablet made from equal parts of saccharose and maltase incorporating 0.1 mg kinetin and 10% PEG, wherein the tablet is coated with a solution of high-molecular polylactic acid.

### EXAMPLE 1

Potato tissue was cultured in a culture medium with homogeneously dissolved nutrients (3% saccharose, 100 µg/l BAP and DKW) and a delayed dispensing salt in the presence and absence of a sugar stock.

Moulded products of stearic acid comprising 40% saccharose were coated with a coating of stearic acid. Four of such coated moulded products of 5 gram (total 20 grams) were added to 150 ml of aqueous medium with a standard salt and sugar composition sufficient for a month's growth of the tissues. The sugar was dispensed gradually from the moulded products with a delay of about a week and taken up into the culture medium. An average of about 10% of the total quantity of sugar was taken up per week in the aqueous culture medium. The dispensing speed was additionally delayed, particularly in the first three weeks, by the coating.

The test set-up is summarized in table 1.

**Table 1. Experiment 1**

| **Ingredients of medium** | **+ stock** | **- stock** |
|---|---|---|
| dissolved sugar | + | + |
| dissolved salt | + | + |
| delayed dispensing salt product | + | + |
| stock of sugar | + | - |
| water | + | + |

In the case of the plant tissue cultured in the presence of the nutrient stock from which sugar was dispensed gradually in delayed manner to the culture medium, 30-70% more leaf pairs and 30-70% more formed shoots were observed after 6 weeks.

### EXAMPLE 2

In a subsequent experiment lilies were cultured in a culture medium with dissolved sugar, salt and BAP in the presence and absence of a coated nutrient stock according to the invention comprising 30% sugar and hormone (500 µg). The test set-up is summarized in table 2.

**Table 2. Experiment 3**

| **Ingredients of medium** | **- stock** | **+ stock** |
|---|---|---|
| dissolved sugar | + | + |
| dissolved salt | + | + |
| sugar stock | - | + |
| water | + | + |
| BAP hormone dissolved | + | + |
| BAP stock | - | + |

20-70% more bulb formation was seen in the culture to which the coated sugar and hormone stock were added.

### EXAMPLE 3

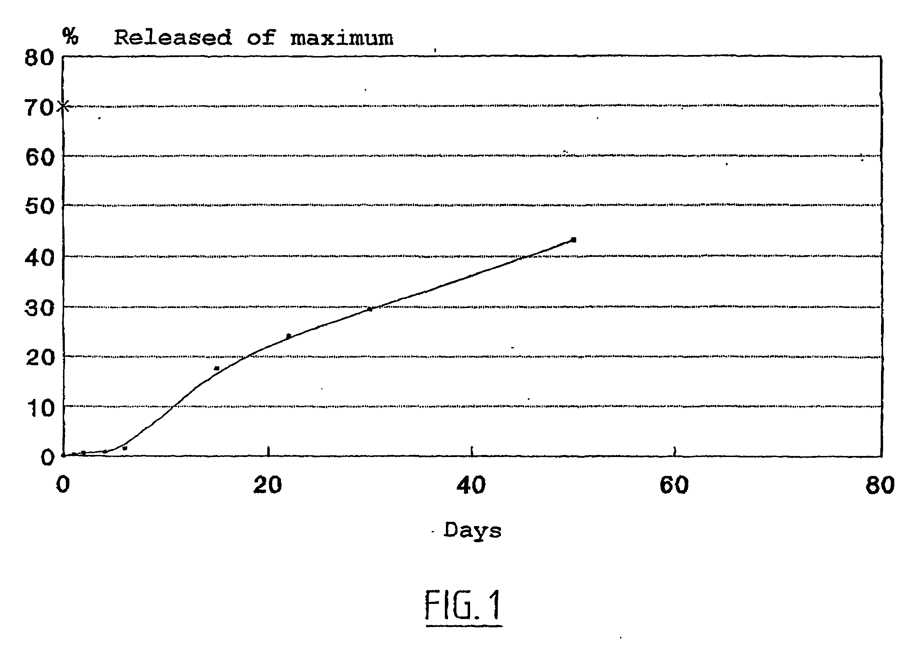

The dispensing pattern of diverse nutrient stocks according to the invention was determined. The results hereof are shown in figures 1-4.

Figure 1 shows the dispensing pattern of a coated moulded product of stearic acid incorporating saccharose (60% stearic acrid/40% saccharose). As becomes apparent from the figure, the sugar is relinquished gradually to the medium in delayed manner, i.e. with a delay of about 1 week.

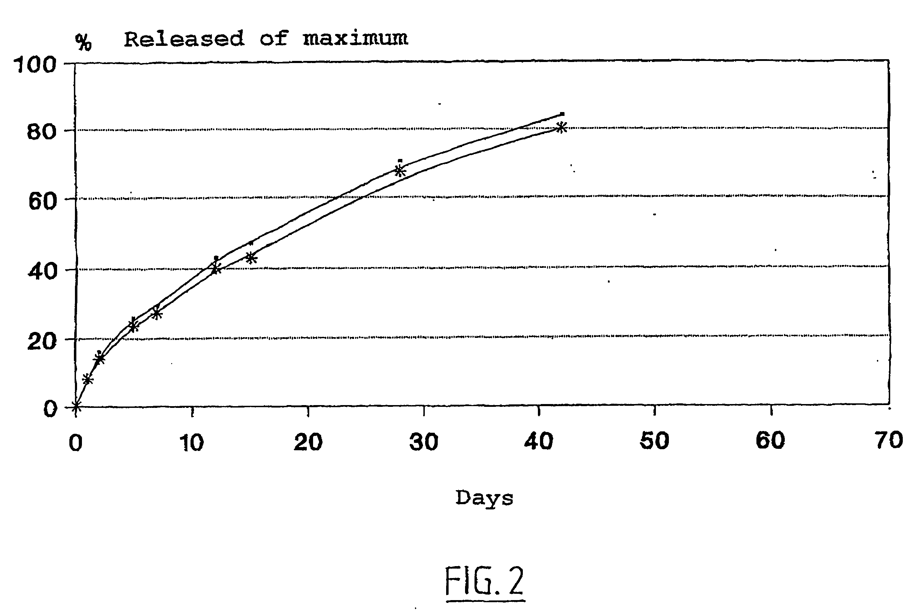

Figure 2 shows the gradual dispensing pattern of an uncoated moulded product of stearic acid incorporating both BAP hormone (50 µg) and sugar (50%).

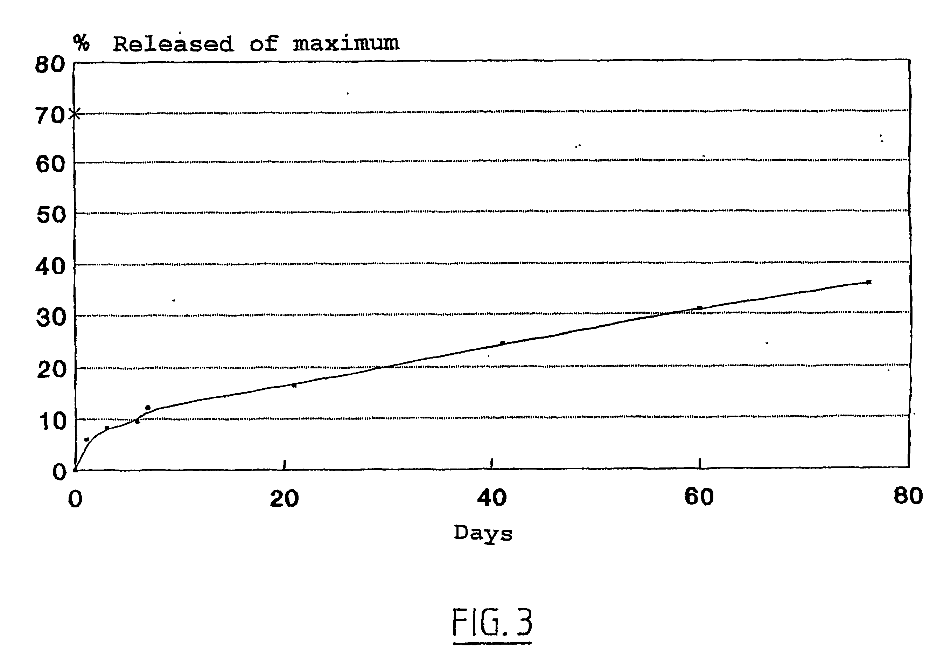

Figure 3 finally shows the dispensing pattern of a moulded product of a mixture of stearic acid and palmitic acid incorporating 30% saccharose in stearic acid.

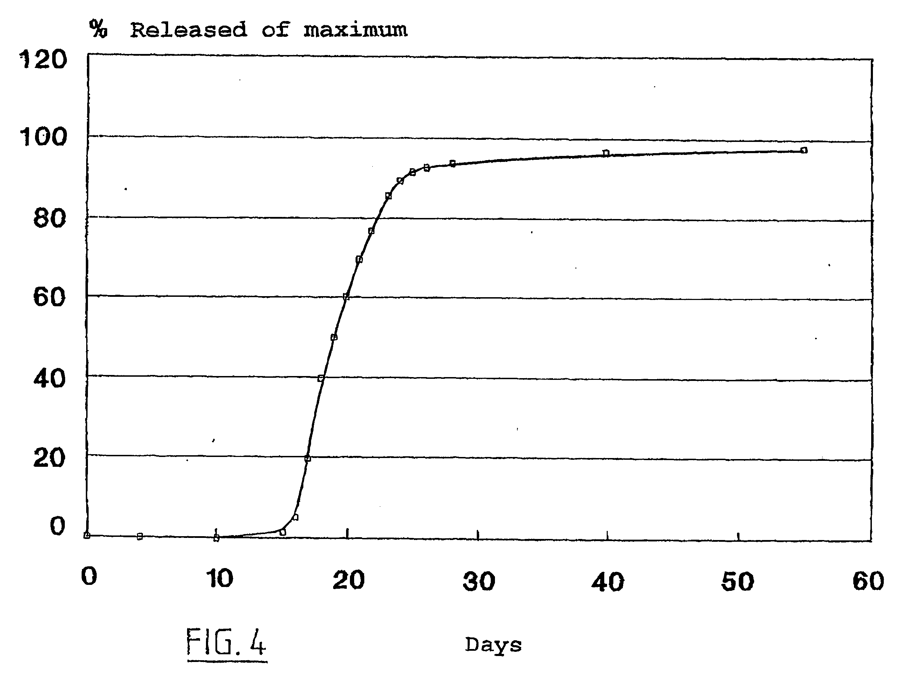

Figure 4 shows the dispensing pattern of a tablet made from equal parts of saccharose and maltose incorporating 0.1 mg kinetin and 10% polyethylene glycol, wherein the tablet is coated with a solution of high-molecular polylactic acid.

## Claims

1. Culture system for plants and/or plant tissues, comprising at least one liquid culture medium comprising one or more nutrients and a stock of one or more nutrients from which the nutrients are dispensed gradually to the culture medium.

2. Culture system as claimed in claim 1, **characterized in that** the nutrients are dispensed in delayed manner to the culture medium.

3. Culture system as claimed in claim 1 or 2, **characterized in that** the nutrients are dispensed in delayed and gradual manner to the culture medium

4. Culture system as claimed in claim 1, 2 or 3, **characterized in that** the nutrient stock comprises a tablet, block, capsule, granulate, moulded product, powder mixture, paste or syrup.

5. Culture system as claimed in any of the claims 1-4, **characterized in that** the stock comprises at least one or more fatty acids and/or derivatives thereof, in which the nutrients are incorporated in finely distributed manner

6. Culture system as claimed in claim 5, **characterized in that** the fatty acids and/or derivatives thereof have a melting temperature which is above the temperature of the culture medium.

7. Culture system as claimed in claim 6, **characterized in that** the melting temperature lies above 15°C, preferably above 20°C.

8. Culture system as claimed in any of the claims 5-7, **characterized in that** the fatty acids comprise stearic acid, palmitic acid and/or myristic acid.

9. Culture system as claimed in any of the clams 4-8, **characterized in that** the stock comprises a moulded product of stearic acid in which the nutrients are incorporated in finely distributed manner.

10. Culture system as claimed in any of the claims 1-9, **characterized in that** the nutrients comprise carbohydrates, hormones, proteins, vitamins, plant growth regulators, salts, minerals and/or crop protecting agent.

11. Culture system as claimed in claim 10, **characterized in that** the hormones comprise auxins, gribberellins, abscisinic acid and/or cytokinins.

12. Culture system as claimed in claim 10, **characterized in that** the salts comprise nitrate, phosphate, magnesium, potassium, borate and/or sulphate salts.

13. Culture system as claimed in any of the claims 1-12, **characterized in that** the stock is arranged in the culture medium.

## Patentansprüche

1. Anzuchtsystem für Pflanzen und/oder Pflanzengewebe, umfassend wenigstens ein flüssiges Anzuchtmedium, welches ein oder mehrere Nährstoffe umfasst, und einen Vorrat von einem oder mehreren Nährstoffen, aus dem die Nährstoffe allmählich in das Anzuchtmedium abgegeben werden können.

2. Anzuchtsystem nach Anspruch 1,
**dadurch gekennzeichnet,**
**dass** die Nährstoffe verzögert an das Anzuchtmedium abgegeben werden.

3. Anzuchtsystem nach Anspruch 1 oder 2,
**dadurch gekennzeichnet,**
**dass** die Nährstoffe verzögert und allmählich an das Anzuchtmedium abgegeben werden.

4. Anzuchtsystem nach Anspruch 1, 2 oder 3,
**dadurch gekennzeichnet,**
**dass** der Nährstoffvorrat eine Tablette, einen Block, eine Kapsel, ein Granulat, einen Formkörper, eine Pulvermischung, eine Paste oder einen Sirup umfasst.

5. Anzuchtsystem nach einem der Ansprüche 1 bis 4,
**dadurch gekennzeichnet,**
**dass** der Vorrat wenigstens eine oder mehrere Fettsäuren und/oder Derivate davon umfasst, in welcher die Nährstoffe fein verteilt eingebracht sind.

6. Anzuchtsystem nach Anspruch 5,
**dadurch gekennzeichnet,**
**dass** die Fettsäuren und/oder deren Derivate eine Schmelztemperatur aufweisen, welche über der Temperatur des Anzuchtmediums liegt.

7. Anzuchtsystem nach Anspruch 6,
**dadurch gekennzeichnet,**
**dass** die Schmelztemperatur über 15°C, vorzugsweise über 20°C, liegt.

8. Anzuchtsystem nach einem der Ansprüche 5 bis 7,
**dadurch gekennzeichnet,**
**dass** die Fettsäuren Stearinsäure, Palmitinsäure oder/und Myristinsäure umfassen.

9. Anzuchtsystem nach einem der Ansprüche 4 bis 8,
**dadurch gekennzeichnet,**
**dass** der Vorrat einen Formkörper aus Stearinsäure umfasst, in welchem die Nährstoffe fein verteilt eingebracht sind.

10. Anzuchtsystem nach einem der Ansprüche 1 bis 9,
**dadurch gekennzeichnet,**
**dass** die Nährstoffe Kohlehydrate, Hormone, Proteine, Vitamine, Pflanzenwuchsregulatoren, Salze, Mineralien und/oder ein Pflanzenschutzmittel umfassen.

11. Anzuchtsystem nach Anspruch 10,
**dadurch gekennzeichnet,**
**dass** die Hormone Auxine, Giberelline, Abscisinsäure und/oder Cytokinine umfassen.

12. Anzuchtsystem nach Anspruch 10,
**dadurch gekennzeichnet,**
**dass** die Salze Nitrat-, Phosphat-, Magnesium-, Kalium-, Borat- und/oder Sulfatsalze umfassen.

13. Anzuchtsystem nach einem der vorherigen Ansprüche,
**dadurch gekennzeichnet,**
**dass** der Vorrat im Anzuchtmedium angeordnet ist.

## Revendications

1. Système de culture pour plantes et/ou tissus végétaux, qui comprend au moins un milieu de culture liquide comprenant un ou plusieurs éléments nutritifs et une réserve d'un ou plusieurs éléments nutritifs de laquelle les éléments nutritifs sont distribués graduellement au milieu de culture.

2. Système de culture selon la revendication 1, **caractérisé en ce que** les éléments nutritifs sont distribués de manière retardée au milieu de culture.

3. Système de culture selon la revendication 1 ou 2, **caractérisé en ce que** les éléments nutritifs sont distribués de manière retardée et progressive au milieu de culture.

4. Système de culture selon la revendication 1, 2 ou 3, **caractérisé en ce que** la réserve d'éléments nutritifs comprend un comprimé, un bloc, une gélule, un granule, un produit moulé, un mélange de poudre, une pâte ou un sirop.

5. Système de culture selon l'une quelconque des revendications 1 à 4, **caractérisé en ce que** la réserve comprend un acide gras ou plus et/ou des dérivés de ceux-ci, dans lesquels les éléments nutritifs sont finement répartis.

6. Système de culture selon la revendication 5, **caractérisé en ce que** les acides gras et/ou leurs dérivés ont une température de fusion qui est supérieure à la température du milieu de culture.

7. Système de culture selon la revendication 6, **caractérisé en ce que** la température de fusion est supérieure à 15°C, de préférence supérieure à 20°C.

8. Système de culture selon l'une quelconque des revendications 5 à 7, **caractérisé en ce que** les acides gras comprennent l'acide stéarique, l'acide palmitique et/ou l'acide myristique.

9. Système de culture selon l'une quelconque des revendications 4 à 8, **caractérisé en ce que** la réserve comprend un produit moulé d'acide stéarique dans lequel les éléments nutritifs sont finement répartis.

10. Système de culture selon l'une quelconque des revendications 1 à 9, **caractérisé en ce que** les éléments nutritifs comprennent des glucides, des hormones, des protéines, des vitamines, des régulateurs de la croissance végétale, des sels, des minéraux et/ou un agent de protection des cultures.

11. Système de culture selon la revendication 10, **caractérisé en ce que** les hormones comprennent les auxines, les gibbérellines, l'acide abscisinique et/ou les cytokinines.

12. Système de culture selon la revendication 10, **caractérisé en ce que** les sels comprennent les sels de nitrate, de phosphate, de magnésium, de potassium, de borate et/ou de sulfate.

13. Système de culture selon l'une quelconque des revendications 1 à 12, **caractérisé en ce que** la réserve est disposée dans le milieu de culture.
